# EUROPEAN PATENT APPLICATION

(11) **EP 1 033 258 A1**
(43) Date of publication of application: **06.09.2000**
(21) Application number: 00200623.7
(22) Date of filing: 23.02.2000
(51) Int. Cl.: B41M 3/14

(54) **Security document consisting of a laminate**

(30) Priority: 03.03.1999 EP 99200601
(71) Applicant: AGFA-GEVAERT N.V., 2640 Mortsel (BE)
(72) Inventor: Vermeulen, Leo, c/o Agfa-Gevaert N.V., 2640 Mortsel (BE); Boulonne, Michel, c/o Agfa-Gevaert N.V., 2640 Mortsel (BE); Vertruyen, Diane, c/o Agfa-Gevaert N.V., 2640 Mortsel (BE); Wouters, Walther, c/o Agfa-Gevaert N.V., 2640 Mortsel (BE)

(57) **Abstract**

According to the present invention there is provided a security document consisting of a laminate comprising an inner opaque, translucent or transparent layer package and on both sides of said inner layer package transparent layer packages at least one of which carries information, characterized in that all layer packages have the same surface area except the inner layer package.

## Description

### FIELD OF THE INVENTION

The present invention relates to security documents that can be verified on their authenticity and are protected against counterfeiting by photo-copying.

### BACKGROUND OF THE INVENTION

Security documents that must be verifiable on their authenticity are e.g. all kinds of identification documents such as passports, visas, identity cards, driver licenses, bank cards, credit cards, security entrance cards, and further value-documents such as banknotes, shares, bonds, certificates, cheques, lottery tickets and all kinds of entrance tickets such as airplane tickets and railroad season-tickets.

Nowadays, by the availability of markedly improved black-and-white and color copiers it becomes more and more easy to copy documents at high quality hardly to distinguish from the originals.

To protect the above mentioned documents against fraudulent alterations and reproduction by photo-copying different techniques are used such as the melt-laminating or glueing thereto of preprinted plastic overlayers; the printing with special inks; the application of coatings or layers for example loaded with magnetic or fluorescent pigments; coloring or metallizing the substrate of the documents; incorporating holograms; applying fine line printing, watermarks, fibers, security threads, light diffraction marks, liquid crystal marks and/or substances called nacreous, iridiscent or interference pigments.

In view of more sophisticated methods of counterfeiting, the demands on security documents also increase.

### OBJECTS OF THE INVENTION

It is an object of the present invention to provide a security document that can readily verified on its authenticity.

It is a further object of the invention to provide a security document that can hardly be counterfeited.

### SUMMARY OF THE INVENTION

According to the present invention there is provided a security document consisting of a laminate comprising an inner opaque, translucent or transparent layer package and on both sides of said inner layer package transparent layer packages at least one of which carries information, characterized in that all layer packages have the same surface area except the inner layer package.

### DETAILED DESCRIPTION OF THE INVENTION

In one embodiment of the invention, the laminate comprises five layer packages

The first layer package consist of a transparent flexible support covered with an image-receiving layer. The transparent support is preferably a plastic, more preferably a polyester, most preferably polyethylene terephthalate.

In accordance with a first mode in the security document according to the present invention a black-and-white silver image is formed by the silver salt diffusion transfer process, called herein DTR-process. According to said process dissolved silver halide salt is transferred imagewise in the image receiving layer, called development nuclei containing layer, for reducing therein transferred silver salt.

The principles of the DTR-process are described in **US-P- 2 352 014** of André Rott, issued June 20, 1944. According to said process silver complexes are image-wise transferred by diffusion from a silver halide emulsion layer to an image-receiving layer, where they are converted, in the presence of development nuclei, into a silver image. For this purpose, an image-wise exposed silver halide emulsion layer is developed by means of a developing substance in the presence of a so-called silver halide solvent. In the exposed parts of the silver halide emulsion layer the silver halide is developed to metallic silver so that it cannot dissolve anymore and consequently cannot diffuse. In the non-exposed parts of the silver halide emulsion layer the silver halide is converted into soluble silver complexes by means of a silver halide complexing agent, acting as silver halide solvent, and said complexes are transferred by diffusion into an image-receiving layer being in waterpermeable contact with said emulsion layer to form by the catalytic action of said development nuclei, in so-called physical development, a silver-containing image in the image-receiving layer.

More details on the DTR-process can be found in "Photographic Silver Halide Diffusion Processes" by A. Rott and E. Weyde, Focal Press, London, New York (1972).

In accordance with a second mode in the security document according to the present invention one or more dye images is formed by the dye diffusion transfer process (dye DTR-process) wherein the image-wise transfer of dye(s) is controlled by the development of (a) photo-exposed silver halide emulsion layer(s), and wherein dye(s) is (are) transferred imagewise in a special image receiving layer, called mordant layer, for fixing the dyes.

Dye diffusion transfer reversal processes are based on the image-wise transfer of diffusible dye molecules from an image-wise exposed silver halide emulsion material into a waterpermeable image-receiving layer containing a mordant for the dye(s). The image-wise diffusion of the dye(s) is controlled by the development of one or more image-wise exposed silver halide emulsion layers, that for the production of a multicolor image are differently spectrally sensitized and contain respectively a yellow, magenta and cyan dye molecules. A survey of dye diffusion transfer imaging processes has been given by Christian C. Van de Sande in Angew. Chem. - Ed. Engl. 22 (1983) n° 3, 191-209 and a particularly useful process is described in **US-P- 4 496 645**.

For use in dye diffusion transfer photography the type of mordant chosen will depend upon the dye to be mordanted. If acid dyes are to be mordanted, the image-receiving layer being a dye-mordanting layer contains basic polymeric mordants such as polymers of amino-guanidine derivatives of vinyl methyl ketone such as described in **US-P- 2 882 156,** and basic polymeric mordants and derivatives, e.g. poly-4-vinylpyridine, the metho-p-toluene sulphonate of poly-2-vinylpyridine and similar compounds described in **US-P- 2 484 430,** and the compounds described in the published **DE-A- 2 009 498** and **2 200 063**. Other mordants are long-chain quaternary ammonium or phosphonium compounds or ternary sulphonium compounds, e.g. those described in **US-P 3 271 147** and **3 271 148**,, and cetyltrimethyl-ammonium bromide. Certain metal salts and their hydroxides that form sparingly soluble compounds with the acid dyes may be used too. The dye mordants are dispersed or molecularly divided in one of the usual hydrophilic binders in the image-receiving layer, e.g. in gelatin, polyvinylpyrrolidone or partly or completely hydrolysed cellulose esters.

In **US-P- 4 186 014** cationic polymeric mordants are described that are particularly suited for fixing anionic dyes, e.g. sulphinic acid salt dyes that are image-wise released by a redox-reaction described e.g. in in published **EP-A- 0 004 399** and **US-P- 4 232 107**.

The DTR process can be utilized for reproducing line originals e.g. printed documents, as well as for reproducing continuous tone originals, e.g. portraits.

By the fact that the DTR-image is based on diffusion transfer of imaging ingredients the image-receiving layer have to be waterpermeable.

The reproduction of black-and-white continuous tone images by the DTR-process requires the use of a recording material capable of yielding images with considerable lower gradation than is normally applied in document reproduction to ensure the correct tone rendering of continuous tones of the original. In document reproduction silver halide emulsion materials are used which normally mainly contain silver chloride. Silver chloride not only leads to a more rapid development but also to high contrast.

In **US-P- 3 985 561**, to be read in conjunction herewith, a light-sensitive silver halide material is described wherein the silver halide is predominantly chloride and this material is capable of forming a continuous tone image on or in an image-receiving material by the diffusion transfer process.

According to said U.S. patent a continuous tone image is produced by the diffusion transfer process in or on an image-receiving layer through the use of a light-sensitive layer which contains a mixture of silver chloride and silver iodide and/or silver bromide dispersed in a hydrophilic colloid binder e.g. gelatin, wherein the silver chloride is present in an amount of at least 90 mole % based on the total mole of silver halide and wherein the weight ratio of hydrophilic colloid to silver halide, expressed as silver nitrate, is between 3:1 and about 10:1 by weight.

With these light-sensitive materials successful reproduction of continuous tone images can be obtained probably as a result of the presence of the indicated amounts of silver iodide and/or silver bromide and of the defined high ratio of hydrophillic colloid to silver halide.

According to **US-P- 4 242 436** likewise to be read in conjunction herewith, the reproduction of continuous tone images can be improved by developing the photographic material with a mixture of developing agents comprising an o-dihydroxybenzene, e.g. catechol, a 3-pyrazolidinone e.g. a 1-aryl-3-pyrazolidinone and optionally a p-dihydroxybenzene, e.g. hydroquinone, the molar amount of the o-dihydroxybenzene in said mixture being larger than the molar amount of the 3-pyrazolidinone, and the p-dihydroxybenzene if any being present in a molar ratio of at most 5 % with respect to the o-dihydroxybenzene.

Suitable development nuclei for use in the above mentioned physical development in the image receiving layer are e.g. noble metal nuclei e.g. silver, palladium, gold, platinum, sulphides, selenides or tellurides of heavy metals such as Pd, Ag, Ni and Co.

Preferably used development nuclei are colloidal PdS, Ag2S or mixed silver-nickelsulphide particles. The amount of nuclei used in the image receiving layer is preferably between 0.02 mg/m² and 10 mg/m².

The image receiving layer comprises for best imaging results the physical development nuclei in the presence of a protective hydrophilic colloid, e.g. gelatin and/or colloidal silica, polyvinyl alcohol etc..

The transfer behaviour of the complexed silver largely depends on the thickness of the image-receiving layer and the kind of binding agent or mixture of binding agents used in the nuclei containing layer. In order to obtain a sharp image with high spectral density the reduction of the silver salts diffusing into the image receiving layer must take place rapidly before lateral diffusion becomes substantial. An image-receiving material satisfying said purpose is described in **US-P- 4 859 566**.

In the image-receiving layer gelatin is used preferably as hydrophilic colloid. In said layer gelatin is present preferably for at least 60 % by weight and is optionally used in conjunction with an other hydrophilic colloid, e.g. polyvinyl alcohol, cellulose derivatives, preferably carboxymethyl cellulose, dextran, gallactomannans, alginic acid derivatives, e.g. alginic acid sodium salt and/or watersoluble polyacrylamides.

The image-receiving layer may comprise a silver halide developing agent and/or silver halide solvent, e.g. sodium thiosulphate in an amount of approximately 0.1 g to approximately 4 g per m².

The image-receiving layer may comprise colloidal silica.

The image-receiving layer may contain as physical development accelerators, in operative contact with the developing nuclei, thioether compounds such as those described e.g. in **DE-A- 1 124 354**; **US-P- 4 013 471; US-P- 4 072 526** and in **EP-A- 26 520**.

According to a preferred embodiment the processing liquid and/or the DTR image-receiving material contains at least one image toning agent. In said case the image toning agent(s) may gradually transfer by diffusion from said image-receiving material into the processing liquid and keep therein the concentration of said agents almost steady. In practice such can be realized by using the silver image toning agents in a coverage in the range from 1 mg/m² to 20 mg/m² in a hydrophilic waterpermeable colloid layer.

A survey of suitable toning agents is given in the above mentioned book of André Rott and Edith Weyde, p. 61-65, preference being given to 1-phenyl-1H-tetrazole-5-thiol, also called 1-phenyl-5-mercapto-tetrazole, tautomeric structures and derivatives thereof such as 1-(2,3-dimethylphenyl)-5-mercapto-tetrazole, 1-(3,4-dimethylcyclohexyl)-5-mercapto-tetrazole, 1-(4-methylphenyl)-5-mercapto-tetrazole, 1-(3-chloro-4-methylphenyl)-5-mercaptotetrazole, 1-(3,4-dichlorophenyl)-5-mercapto-tetrazole. Further particularly useful toning agents are of the class of thiohydantoins and of the class of phenyl substituted mercapto-triazoles. Still further toning agents suitable for use in accordance with the preferred embodiment of the present invention are the toning agents described in published **EP-A- 218 752, 208 346, 218 753** and **US-P- 4 683 189**.

The above mentioned DTR image-receiving materials may be used in conjunction with any type of photosensitive material containing a silver halide emulsion layer. For continuous tone reproduction the silver halide comprises preferably a mixture of silver chloride, and silver iodide and/or silver bromide, at least 90 mole % based on the total mole of the silver halide being silver chloride, and the ratio by weight of hydrophillic colloid to silver halide expressed as silver nitrate is between 1:1 and 10:1.

The binder for the silver halide emulsion layer and other optional layers contained on the imaging element is preferably gelatin. But instead of or together with gelatin, use can be made of one or more other natural and/or synthetic hydrophilic colloids, e.g. albumin, casein, zein, polyvinyl alcohol, alginic acids or salts thereof, cellulose derivatives such as carboxymethyl cellulose, modified gelatin, e.g. phthaloyl gelatin etc. The weight ratio in the silver halide emulsion layer of hydrophilic colloid binder to silver halide expressed as equivalent amount of silver nitrate to binder is e.g. in the range of 1:1 to 10:1, but preferably for continuous tone reproduction is between 3.5:1 and 6.7:1.

The silver halide emulsions may be coarse or fine grain and can be prepared by any of the well known procedures e.g. single jet emulsions, double jet emulsions such as Lippmann emulsions, ammoniacal emulsions, thiocyanate- or thioether-ripened emulsions such as those described in **US-P- 2 222 264, 3 320 069**, and **3 271 157**. Surface image emulsions may be used or internal image emulsions may be used such as those described in **US-P- 2 592 250**, **3 206 313**, and **3 447 927**. If desired, mixtures of surface and internal image emulsions may be used as described in **US-P- 2 996 382**.

The silver halide particles of the photographic emulsions may have a regular crystalline form such as cubic or octahedral form or they may have a transition form. Regular-grain emulsions are described e.g. in J. Photogr. Sci., Vol. 12, No. 5, Sept./Oct. 1964, pp. 242-251. The silver halide grains may also have an almost spherical form or they may have a tabular form (so-called T-grains), or may have composite crystal forms comprising a mixture of regular and irregular crystalline forms. The silver halide grains may have a multilayered structure having a core and shell of different halide composition. Besides having a differently composed core and shell the silver halide grains may comprise also different halide compositions and metal dopants inbetween.

The average size expressed as the average diameter of the silver halide grains may range from 0.2 to 1.2 um, preferably between 0.2mm and 0.8mm, and most preferably between 0.3mm and 0.6mm. The size distribution can be homodisperse or heterodispere. A homodisperse size distribution is obtained when 95 % of the grains have a size that does not deviate more than 30 % from the average grain size.

The emulsions can be chemically sensitized e.g. by adding sulphur-containing compounds during the chemical ripening stage e.g. allyl isothiocyanate, allyl thiourea, and sodium thiosulphate. Also reducing agents e.g. the tin compounds described in **BE-A- 493 464** and **568 687**, and polyamines such as diethylene triamine or derivatives of aminomethane-sulphonic acid can be used as chemical sensitizers. Other suitable chemical sensitizers are noble metals and noble metal compounds such as gold, platinum, palladium, iridium, ruthenium and rhodium. This method of chemical sensitization has been described in the article of R.KOSLOWSKY, Z. Wiss. Photogr. Photophys. Photochem. 46, 65-72 (1951).

The emulsions can also be sensitized with polyalkylene oxide derivatives, e.g. with polyethylene oxide having a molecular weight of 1000 to 20,000, or with condensation products of alkylene oxides and aliphatic alcohols, glycols, cyclic dehydration products of hexitols, alkyl-substituted phenols, aliphatic carboxylic acids, aliphatic amines, aliphatic diamines and amides. The condensation products have a molecular weight of at least 700, preferably of more than 1000. It is also possible to combine these sensitizers with each other as described in **BE-P- 537 278** and **GB-P- 727 982**.

The silver halide emulsion may be sensitized panchromatically to ensure reproduction of all colors of the visible part of the spectrum or it may be orthochromatically sensitized.

The spectral photosensitivity of the silver halide can be adjusted by proper spectral sensitization by means of the usual mono- or polymethine dyes such as acidic or basic cyanines, hemicyanines, oxonols, hemioxonols, styryl dyes or others, also tri- or polynuclear methine dyes e.g. rhodacyanines or neocyanines. Such spectral sensitizers have been described by e.g. F.M. HAMER in "The Cyanine Dyes and Related Compounds" (1964) Interscience Publishers, John Wiley & Sons, New York.

The silver halide emulsions may contain the usual stabilizers e.g. homopolar or salt-like compounds of mercury with aromatic or heterocyclic rings such as mercaptotriazoles, simple mercury salts, sulphonium mercury double salts and other mercury compounds. Other suitable stabilizers are azaindenes, preferably tetra- or penta-azaindenes, especially those substituted with hydroxy or amino groups. Compounds of this kind have been described by BIRR in Z. Wiss. Photogr. Photophys. Photochem. 47, 2-27 (1952). Other suitable stabilizers are i.a. heterocyclic mercapto compounds e.g. phenylmercaptotetrazole, quaternary benzothiazole derivatives, and benzotriazole.

A survey of photographic silver halide emulsions and their preparation is given in Research Disclosure December 1989, item 308119.

Processing of the image-wise exposed photographic silver halide emulsion layer proceeds whilst in contact with an image receiving material according to the invention and is accomplished using an alkaline processing liquid having a pH preferably between 9 and 13. The pH of the alkaline processing liquid may be established using various alkaline substances. Suitable alkaline substances are inorganic alkali e.g. sodium hydroxide, potassium carbonate or alkanolamines or mixtures thereof. Preferably used alkanolamines are tertiary alkanolamines e.g. those described in **EP-A- 397 925**, **EP-A- 397 926, EP-A- 397 927, EP-A- 398 435** and **US-P- 4 632 896**.

A combination of alkanolamines having both a pKa above or below 9 or a combination of alkanolamines whereof at least one has a pKa above 9 and another having a pKa of 9 or less may also be used as disclosed in the Japanese patent applications laid open to the public numbers **73949/61, 73953/61, 169841/61, 212670/60, 73950/61**, **73952/61, 102644/61, 226647/63, 229453/63, US-P- 4 362 811, US-P- 4 568 634** etc.. The concentration of these alkanolamines is preferably from 0.1 mol/l to 0.9 mol/l.

Suitable developing agents for the exposed silver halide are e.g. hydroquinone-type and 1-phenyl-3-pyrazolidone-type developing agents as well as p-monomethylaminophenol and derivatives thereof. Preferably used is a combination of a hydroquinone-type and 1-phenyl-3-pyrazolidone-type developing agent wherein the latter is preferably incorporated in one of the layers comprised on the support of the photographic material. A preferred class of 1-phenyl-3-pyrazolidone-type developing agents is disclosed in the published **EP-A- 449 340**.

According to a preferred embodiment for continuous tone reproduction a mixture of developing agents comprising an o-dihydroxybenzene, e.g. catechol, a 3-pyrazolidinone e.g. a 1-aryl-3-pyrazolidinone and optionally a p-dihydroxybenzene, e.g. hydroquinone the molar amount of the o-dihydroxybenzene in said mixture being larger than the molar amount of the 3-pyrazolidinone, and the p-dihydroxybenzene if any being present in a molar ratio of at most 5 % with respect to the o-dihydroxybenzene can be used. Other type of developing agents suitable for use in accordance with the present invention are reductones e.g. ascorbic acid derivatives.

The developing agent or a mixture of developing agents can be present in an alkaline processing solution, in the photographic material or the image receiving material. In case the developing agent or a mixture of developing agents is contained in the photographic material and/or image receiving material, the processing solution can be merely an aqueous alkaline solution that initiates and activates the development.

In the DTR process the photographic element is developed in the presence of a silver halide solvent. Preferably used silver halide solvents are water soluble thiosulphate compounds such as ammonium and sodium thiosulphate, or ammonium and alkali metal thiocyanates. Other useful silver halide solvents (or "complexing agents") are described in the book "The Theory of the Photographic Process" edited by T.H. James, 4th edition, p. 474-475 (1977), in particular sulphites and uracil. Further interesting silver halide complexing agents are cyclic imides, preferably combined with alkanolamines, as described in **US-P- 4 297 430** and **US-P- 4 355 090**. 2-mercaptobenzoic acid derivatives are described as silver halide solvents in **US-P- 4 297 429**, preferably combined with alkanolamines or with cyclic imides and alkanolamines. Dialkylmethylenedisulfones can also be used as silver halide solvent.

The silver halide solvent is preferably present in the processing solution but may also be present in one or more layers comprised on the support of the imaging element and/or receiving material. When the silver halide solvent is incorporated in the photographic material it may be incorporated as a silver halide solvent precursor as disclosed in e.g. Japanese published unexamined patent applications no. 15247/59 and 271345/63, **US-P- 4 693 955** and **US-P- 3 685 991.**

The processing solution for use in the production of black-and-white photographs in the security documents according to the present invention may comprise other additives such as e.g. thickeners, preservatives, detergents e.g. acetylenic detergents such as SURFYNOL 104 ™, SURFYNOL 465 ™, SURFYNOL 440 ™ etc. all available from Air Reduction Chemical Company, New York.

The DTR-process is normally carried out at a temperature in the range of 10°C to 35°C.

Further details about the black-and-white DTR process and also about the dye diffusion transfer process and image receiving materials used therein are described in Research Disclosure November 1976, item 15162.

On the image receiving layer may be present fine line patterns such as guilloches , microtext or fine lines. Said pattern are made from a hydrophobic material which can resist DTR processing. In this way, the DTR effect is obtained. This means that on the places of the image receiving layer provided with a hydrophobic material no silver or dye is formed. The transparent support can be imprinted with various kinds of ink such as UV-inks, optical varying inks, optical varying colors, with colors such as pastel tints. Furtheron, holograms can be used. Suitable holograms are see-through holograms and high index holograms.

Instead of an image receiving layer also a hologram layer can be used.the image on the image receiving layer can also be a classical photograph, an image obtained by dye diffusion thermal transfer, by inkjet, by chromapress or by toner.

The second layer package consist of an adhesive layer package. This package consist of a polyethylene terephthalate base with on both sides a polyethylene layer. Said polyethylene terephthalate can be imprinted with patterns. Inks suitable for the imprinting of said layer are U.V. inks, optical varying colors, optical varying inks, I.R. inks and holograms which only partial covers the polyethylene terephthalate layer. The polyethylene terephthalate layer is preferably between 12 and 60 µm thick, more preferably 15 µm thick while both polyethylene layers are preferably between 12 and 75 µm thick, more preferably30 µm thick.

The third layer package comprises a transparent or translucent or preferably an opaque imaged layer. Said layer may be opaque or transparent, e.g. a paper support or a resin support. When a paper support is used preference is given to one coated at one or both sides with an alpha-olefin polymer, e.g. a polyethylene layer. As transparent layer an organic resin support is used e.g. cellulose esters such as cellulose acetate, cellulose propionate and cellulose butyrate; polyesters such as poly(ethylene terephthalate); polyvinyl acetals, polystyrene, polycarbonate; polyvinylchloride or poly-Alpha-olefins such as polyethylene or polypropylene. Opaque layers can also be obtained by the inclusion of opaque pigments such as titanium dioxide or barium sulphate or aluminum hydroxide in a transparent layer. This third layer comprises an image or text, f.i. personal data, signature, photograph and 2 D bar code. On said layer can be printed with a wax printer, a laser printer, an ink jet printer and all other kinds of printers or can be applied a photograph..

The fourth package of layers is identical with the second package of layers except that the polyethylene terephthalate layer is not imprinted on identical places as the first and second layer package.

The fifth package of layers is identical with the first package of layers except that it is not imaged on the same places as the first and second layer package.

In a preferred embodiment, a unit of information is partly represented in the first or second layer package while the remaining of said unit of information is represented in the fourth or fifth layer package, making forgery or falsification of said document more difficult.

In a second embodiment, the laminate comprises four layer packages.

The first tree layer packages are identical with the first three layer packages of the first embodiment. The fourth layer package consist of a polyethylene terephthalate layer covered with a polyethylene layer.

In the first embodiment, the first layer package serves as the support where the flexible support is the outermost layer. On the image-receiving layer or the hologram layer a first polyethylene layer of the second layer package is laminated. The third layer or inner layer is laminated with the image side away from the support on the second polyethylene layer of the second layer packet. A first polyethylene layer of the fourth layer package is laminated to the second polyethylene layer of the second layer package and/or to the image side of the third layer. The fifth layer package is laminated with its image receiving layer to the second polyethylene layer of the fourth layer package.

In the second embodiment, the first layer package serves as the support where the flexible support is the outermost layer. On the image-receiving layer or the hologram layer a first polyethylene layer of the second layer package is laminated. The third layer or inner layer is laminated with the image side away from the support on the second polyethlylene layer of the second layer packet. The polyethylene layer of the fourth layer package is laminated to the second polyethylene layer of the second layer package and/or to the image side of the third layer.

It is characteristic for said two embodiments that all layer packages have the same surface area except the third. The length and/or the width of said third layer package are smaller than the length and the width of the other packages, which are identical or there is a hole in said third layer. Hereby it is possible to see the image or pattern of the first layer package through the fourth or the fifth layer package. It is also possible in said embodiments to see the information in the fourt or fifth layer through the first layer package

### EXAMPLE

A positive DTR-element consisting of a transparent polyethylene terephthalate and an image-receiving layer is imaged as described in EP 306,561, example 5 with the exception of a top layer. Said layer package is laminated to a laminating layer package of the same size, consisting of a middle polyethylene terephthalate layer of 15 µm thick and two outer layers of polyethylene of 30 µm thick. A paper support of the same size as the foregoing layer packages but with a central hole in it is printed on one side with an image and then laminated with its imaged side to the free polyethylene layer of the second package lyer. The unprinted side of said paper support is laminated to a layer package of the same size as the foregoing layer packages and consisting of a middle polyethylene terephthalate layer of 15 µm thickness and two outer layers of polyethylene with a thickness of 30 µm. A last layer package, consisting of a transparent polyethylene terephthalate base and an image receiving layer of the same size as the foregoing layer packages is laminated to the free polyethylene layer of the fourth layer package. By looking through the last layer package it is perfectly possible to see the image of the first layer package in the area of the hole of the paper support.

## Claims

1. A security document consisting of a laminate comprising an inner opaque, translucent or transparent layer package and on both sides of said inner layer package transparent layer packages at least one of which carries information, characterized in that all layer packages have the same surface area except the inner layer package.

2. A security document according to claim 1 wherein the laminate comprises five layer packages.

3. A security document according to claim 2 wherein a first layer package consist of a transparent flexible support covered with an imaged layer.

4. A security document according to claims 3 wherein on the imaged layer fine line patterns or microtext are present.

5. A security document according to claim 3 wherein instead of an imaged layer a hologram layer is used.

6. A security document according to any of claims 2 to 5 wherein a second layer package consist of an adhesive layer package, this package consisting of a polyethylene naphthalate base with on both sides a polyethylene layer.

7. A security document according to claim 1 wherein the laminate comprises four layer packages.

8. A security document according to any of claims 1 to 7 wherein the length and/or the width of said inner layer package are smaller than the length and/or the width of the other packages, which are identical.

9. A security document according to any of claims 1 to 7 wherein said inner layer package comprises a hole.
